# EUROPÄISCHE PATENTANMELDUNG

(11) **EP 4 700 640 A1**
(43) Veröffentlichungstag der Anmeldung: **25.02.2026**
(21) Anmeldenummer: 24195148.2
(22) Anmeldetag: 19.08.2024
(51) Int. Cl.: G06F 30/392, G06Q 10/0635, G06Q 10/087, G06Q 30/0601, G06F 111/20, G06F 115/12

(54) **COMPUTERIMPLEMENTIERTES VERFAHREN ZUR SICHERSTELLUNG DER HERSTELLBARKEIT EINES ELEKTRONIKPRODUKTS, VERFAHREN ZUR HERSTELLUNG VON ELEKTRONIKPRODUKTEN, VORBEREITUNGSSYSTEM, HERSTELLUNGSVORRICHTUNG UND COMPUTERPROGRAMM**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Die Erfindung betrifft ein computerimplementiertes Verfahren zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, aufweisend folgende Schritte:
- Bereitstellen einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt,
- Bewerten der zukünftigen Verfügbarkeit wenigstens eines Teils der ersten Elektronikkomponenten in Abhängigkeit wenigstens einer Verfügbarkeitsinformation zur Ermittlung jeweiliger Verfügbarkeitsbewertungen für die bewerteten ersten Elektronikkomponenten,
- Auswahl wenigstens einer gemäß der Verfügbarkeitsbewertung am schlechtesten bewerteten ersten Elektronikkomponente,
- für jede ausgewählte erste Elektronikkomponente Ermittlung wenigstens einer Alternativdesigninformation, die eine zweite Auslegung des Elektronikprodukts mit mehreren miteinander über zweite interne Schnittstellen wechselwirkenden zweiten Elektronikkomponenten beschreibt, indem wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt wird und danach die restliche Auslegung unter Einhaltung der Anforderungen gemäß der Anforderungsinformation auf die geänderte Elektronikkomponente angepasst wird, und
- Vorhalten der wenigstens einen Alternativdesigninformation in einem Speichermittel (3, 12).

## Beschreibung

Die Erfindung betrifft ein computerimplementiertes Verfahren zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, wobei eine Basisdesigninformation bereitgestellt wird, die eine erste Auslegung des Elektronikprodukts mit mehreren miteinander über erste interne Schnittstellen wechselwirkenden ersten Elektronikkomponenten aufweist, die die Anforderungen der Anforderungsinformation erfüllt. Daneben betrifft die Erfindung ein Verfahren zur Herstellung von Elektronikprodukten, ein Vorbereitungssystem, eine Herstellungsvorrichtung und ein Computerprogramm.

Elektronikprodukte auf verschiedenen Skalen bzw. in verschiedenen Größen weisen üblicherweise Elektronikkomponenten auf, die miteinander über definierte Schnittstellen wechselwirken. Unter Elektronikkomponenten ist hierbei im Sinne dieser Offenbarung jede auf Elektronik basierende Funktionskomponente genauso zu verstehen wie unabdingbare Peripheriekomponenten, beispielsweise Stromquellen und dergleichen, sowie Trägerkomponenten für Funktions- und Elektronikkomponenten, insbesondere solche, die auch Leiterbahnen oder sonstige Verbindungsmittel tragen. Ein klassisches Beispiel für eine solche Trägerkomponente ist eine gedruckte Leiterplatte (printed circuit board - PCB), welche als Funktionskomponenten beispielsweise durch Bestückung aufgebrachte Chips und sonstige Bauelemente wie Transistoren, Kondensatoren und dergleichen trägt. Peripheriekomponenten von Elektronikprodukten können auch weitere, nicht zwangsläufig unmittelbar auf eine elektronische Funktion bezogene Vorrichtungen umfassen, beispielsweise Kühleinrichtungen und Gehäuse, in denen beispielsweise Trägerkomponenten gehaltert sein können. Mit dem Aufkommen des 3D-Drucks existieren auch Trägerkomponenten, die beliebige dreidimensionale Form annehmen können. Elektronikkomponenten können auch größere, bereits zusammengebaut gelieferte Funktionskomponenten sein, beispielsweise Wechselrichter und dergleichen. Elektronikprodukte werden in einer Vielzahl von Vorrichtungen und Geräten eingesetzt, beispielsweise in Medizintechnikeinrichtungen, Zügen, Kraftfahrzeugen, Fertigungsanlagen und weiteren, oder sind solche Vorrichtungen.

Damit das Elektronikprodukt in der Zielanwendung korrekt eingesetzt werden kann, beispielsweise in einer anderen Vorrichtung verbaut werden kann, muss es bestimmte Anforderungen erfüllen, die beispielsweise eine bereitzustellende Funktionalität und/oder eine äußere Schnittstelle betreffen.

Um die entsprechende Funktionalität und/oder äußere Schnittstelle bereitzustellen, also den Anforderungen zu genügen, sind verschiedene Konfigurationen von Elektronikkomponenten, im Folgenden als Design oder Auslegung bezeichnet, möglich. Anders gesagt können in verschiedenen Designs verschiedene Zusammenstellungen von Elektronikkomponenten, die über ihre entsprechenden Schnittstellen wechselwirken, verwendet werden, um dieselbe Anforderung zu erfüllen. Im Designprozess für ein Elektronikprodukt wird die Zusammenstellung ausgewählt und die Auslegung ermittelt, welche nach diversen Kriterien als am besten bewertet bzw. optimal angesehen werden. Zur Unterstützung der Auslegung von Elektronikprodukten sind bereits Software-Hilfsmittel verschiedener Art bekannt, beispielsweise sogenannte Konfiguratortools, in denen, gegebenenfalls unterstützt, Verschaltungen konfiguriert werden können, und auch sogenannte Recommender-Anwendungen, die einzelne Elektronikkomponenten und zumindest teilweise Konfigurationen und Verschaltungen selbst zusammenstellen und als Vorschlag anbieten können.

Gleichwirkende oder ähnlich wirkende Elektronikkomponenten, beispielsweise unterschiedlicher Hersteller, haben häufig verschiedene interne Schnittstellen und/oder verschiedene Anforderungen an Peripheriekomponenten, beispielsweise bereitgestellte elektrische Leistung, Kühlungsbedarf und dergleichen. Das bedeutet, wird in einer Auslegung eine Elektronikkomponente ausgetauscht, ist häufig auch eine Anpassung wenigstens einer weiteren Komponente, häufig mehrerer Komponenten, des Elektronikprodukts notwendig. Beispielsweise können sich Veränderungen an der Trägerkomponente, an Peripheriekomponenten, aber auch an anderen Funktions-Elektronikkomponenten ergeben.

Mit aus diesem Grund sind Elektronikprodukte relativ anfällig gegenüber LieferkettenProblemen. Fällt beispielsweise aufgrund von unvorhergesehenen Krisen und/oder Problemen, wie Pandemie, Kriegen und/oder Unfällen auf hauptsächlichen Lieferwegen eine Elektronikkomponente weg, kann die Produktion des Elektronikprodukts zum Stillstand kommen. Ist beispielsweise ein bestimmtes Bauteil für die Bestückung einer gedruckten Leiterplatte bzw. Platine nicht verfügbar, kann es nicht einfach durch ein gleich oder ähnlich wirkendes Bauteil ersetzt werden, da dieses beispielsweise nicht pin-kompatibel ist und eine neue Auslegung der gedruckten Leiterplatte erfordert. Auch muss das Programm zur automatischen Bestückung aktualisiert werden. Bis eine derartige alternative Lösung umgesetzt ist, was mehrere Tage, Wochen oder sogar Monate dauern kann, steht die Produktion des Elektronikprodukts still.

Derartige Problematiken ergeben sich nicht nur bei gedruckten Leiterplatten, sondern auch bei vielen anderen Elektronikprodukten, wo beispielsweise nicht die Kompatibilität der Pins als interne Schnittstelle relevant ist, sondern sonstige definierte Schnittstellen zwischen Modulen und die Eigenschaften dieser Elektronikkomponenten (Stecker, Stromstärken, Hitzebeständigkeit etc.)

In der Vergangenheit war es häufig ausreichend, wenn zweite oder dritte Lieferquellen für identische oder zumindest kein erneutes Design erfordernde, beispielsweise bezüglich der internen Schnittstelle identische, Elektronikkomponenten existierten. Ereignisse in jüngerer Zeit haben jedoch gezeigt, dass bei besonderen Lieferkettenproblemen auch diese Lieferquellen häufig nicht liefern können, sodass die Produktion angehalten werden muss. Ein Re-Design, um eine ausgefallene Elektronikkomponente zu ersetzen und gleichzeitig die Anforderungen gemäß Spezifikation aufrechtzuerhalten, kostet im Anlassfall viel Zeit, beispielsweise einige Wochen bis Monate.

Zwar könnte grundsätzlich angedacht werden, um für alle Eventualitäten gewappnet zu sein, alle Designs, die die Anforderungen erfüllen, zu ermitteln und vorzuhalten, was jedoch wegen des exponentiellen Wachstums der Variantenzahl entweder enorm aufwendig oder sogar gänzlich unmöglich ist.

Der Erfindung liegt daher die Aufgabe zugrunde, einen hinsichtlich Lieferkettenausfällen robusteren Produktdesignprozess und ein entsprechend robusteres Herstellungsverfahren anzugeben.

Diese Aufgabe wird erfindungsgemäß gelöst durch ein Sicherstellungsverfahren, ein Herstellungsverfahren, ein Vorbereitungssystem, eine Herstellungsvorrichtung und Computerprogramme gemäß den nebengeordneten Patentansprüchen. Vorteilhafte Weiterbildungen ergeben sich aus den Unteransprüchen.

Ein computerimplementiertes Verfahren zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, weist erfindungsgemäß folgende Schritte auf:
- Bereitstellen einer Basisdesigninformation, die eine erste Auslegung des Elektronikprodukts mit mehreren miteinander über erste interne Schnittstellen wechselwirkenden ersten Elektronikkomponenten aufweist, die die Anforderungen der Anforderungsinformation erfüllt,
- Bewerten der zukünftigen Verfügbarkeit wenigstens eines Teils der ersten Elektronikkomponenten in Abhängigkeit wenigstens einer Verfügbarkeitsinformation zur Ermittlung jeweiliger Verfügbarkeitsbewertungen für die bewerteten ersten Elektronikkomponenten,
- Auswahl wenigstens einer gemäß der Verfügbarkeitsbewertung am schlechtesten bewerteten ersten Elektronikkomponente,
- für jede ausgewählte erste Elektronikkomponente Ermittlung wenigstens einer Alternativdesigninformation, die eine zweite Auslegung des Elektronikprodukts mit mehreren miteinander über zweite interne Schnittstellen wechselwirkenden zweiten Elektronikkomponenten beschreibt, indem wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt wird und danach die restliche Auslegung unter Einhaltung der Anforderungen gemäß der Anforderungsinformation auf die geänderte Elektronikkomponente angepasst wird, und
- Vorhalten der wenigstens einen Alternativdesigninformation in einem Speichermittel.

Eine grundlegende Idee des erfindungsgemäßen Vorgehens ist es, nur solche alternativen Designs zu ermitteln und vorzuhalten, die auf wahrscheinliche Lieferausfälle hin konzipiert sind. Auf diese Weise können Lieferkettenprobleme unter Nutzung entsprechend ermittelter Alternativdesigninformationen umgangen werden, trotzdem bezüglich der internen Schnittstellen inkompatible zweite Elektronikkomponenten, beispielsweise nicht pin-kompatible Bauteile, verwendet werden. Hierzu wird zunächst eine, insbesondere bezogen auf wenigstens ein Bewertungskriterium optimale, Basisauslegung ermittelt und bereitgestellt.

Ausgehend von der Auslegung gemäß der Basisdesigninformation werden nun zunächst die wahrscheinlichsten Schwachstellen und/oder Engpässe analysiert. Hierzu werden Verfügbarkeitsbewertungen, die aufgrund von Verfügbarkeitsinformationen zu den jeweiligen ersten Elektronikkomponenten ermittelt werden, herangezogen.

Dabei sei angemerkt, dass die Ermittlung der Verfügbarkeitsbewertung auch schon vorab erfolgen kann, beispielsweise für alle in einer Design-Anwendung, mit der die Basisdesigninformation erstellt wird, verfügbaren Elektronikkomponenten. Die Verfügbarkeitsbewertungen können dann beispielsweise in einer Datenbank abgespeichert werden und abgerufen werden, um die Auswahl am schlechtesten bewerteter erster Elektronikkomponenten zu ermöglichen. In einem solchen Fall ist es zweckmäßig, die Verfügbarkeitsbewertungen, insbesondere regelmäßig, durch erneute Bewertung anhand aktualisierter Verfügbarkeitsinformationen zu aktualisieren. Beispielsweise kann eine Aktualisierung immer bei Vorliegen aktualisierter Verfügbarkeitsinformationen erfolgen.

Dies ermöglicht es beispielsweise, im Designprozess selbst, also bei der Ermittlung der Basisdesigninformation, bereits Verfügbarkeiten zu berücksichtigen. Beispielsweise kann vorgesehen sein, dass bei der Ermittlung der Basisdesigninformation mit einer Design-Anwendung, die Zugriff auf die vorab ermittelten Verfügbarkeitsbewertungen hat, bei Auswahl einer Elektronikkomponente, zu der eine Verfügbarkeitsbewertung vorliegt, zumindest dann, wenn eine Hinweisbedingung erfüllt ist, einen auf die Verfügbarkeit gemäß der Verfügbarkeitsbewertung bezogenen, insbesondere mit anderen Elektronikkomponenten vergleichenden, Hinweis auszugeben.

Darüber hinaus können solche vorab ermittelten Verfügbarkeitsbewertungen und/oder aktuell ermittelte Verfügbarkeitsbewertungen auch für eine Bewertung der Basisdesigninformation, beispielsweise als eines der Kriterien zu deren Optimierung, eingehen. Darüber hinaus können Verfügbarkeitsbewertungen auch in eine Risikobewertung und/oder Machbarkeitsbewertung und/oder Kostenabschätzung eines Elektronikprodukts eingehen, beispielsweise bezogen auf die Basisdesigninformation. Beispielsweise kann Verfügbarkeitsbewertungen und/oder deren Differenz, beispielsweise zu einem Soll oder anderen Elektronikkomponenten, ein Kostenwert zugeordnet werden, der in die entsprechende Analyse eingeht. Dies ist insbesondere beim Abwägen von Alternativen bei der Ermittlung der Basisdesigninformation nützlich, da dann nicht nur ein tatsächlicher Preis, Verfügbarkeitsmengen und dergleichen, sondern auch die durch die Verfügbarkeitsbewertung abgeschätzte Verfügbarkeit eingehen.

Die Verfügbarkeitsbewertungen beschreiben letztlich eine Art der mathematischen Repräsentation einer "Vulnerabilität" erster Elektronikkomponenten hinsichtlich deren Verfügbarkeit. Aufgrund der gleichartig ermittelten Verfügbarkeitsbewertungen können diese miteinander verglichen werden, sodass sich bei allen betroffenen ersten Elektronikkomponenten eine Reihenfolge ergibt, anhand derer in einem weiteren Schritt alternative Auslegungen mit zumindest teilweise alternativen zweiten Elektronikkomponenten, welche beispielsweise geringere Engpasswahrscheinlichkeit aufweisen können, ermittelt werden können. Aus Aufwandsgründen muss eine Ermittlung von Alternativdesigninformationen nicht zwangsläufig für alle bewerteten ersten Elektronikkomponenten erfolgen, sondern es können jene, die am wahrscheinlichsten nicht verfügbar sind, ausgewählt werden, beispielsweise durch Vorgabe einer bestimmten Anzahl oder aber durch Vorgabe eines bestimmten Schwellenwerts für die Verfügbarkeitsbewertung.

Für die ausgewählten ersten Elektronikkomponenten, bei denen ein Ausfall, insbesondere durch ein Lieferkettenproblem, besonders wahrscheinlich ist, werden Alternativdesigninformationen ermittelt, indem die ausgewählte erste Elektronikkomponente durch eine Austauschkomponente ersetzt wird, die eine andere interne Schnittstelle aufweist. Ausgehend von diesem Austausch wird die Auslegung gemäß der Basisdesigninformation so angepasst, dass trotz der Veränderung der internen Schnittstelle und gegebenenfalls sonstiger, beispielsweise Peripheriekomponente betreffender Eigenschaften die Anforderungen der Anforderungsinformation weiterhin erfüllt werden. Dies geschieht gemäß der vorliegenden Erfindung zumindest teilweise automatisiert. Ergebnis ist pro ausgewählter erster Elektronikkomponente wenigstens eine Alternativdesigninformation mit über zweite Schnittstellen wechselwirkenden zweiten Elektronikkomponenten, die sich von den ersten Elektronikkomponenten zumindest in der Austauschkomponente für die ausgewählte erste Elektronikkomponente unterscheiden, ggf. auch in weiteren Komponenten.

Dabei sei an dieser Stelle auch angemerkt, dass in Ausführungsbeispielen auch Gruppen von wenigstens zwei ausgewählten ersten Elektronikkomponenten bestimmt werden können, deren erste Elektronikkomponenten alle ausgetauscht werden, worauf hin eine entsprechende Anpassung zur Ermittlung wenigstens einer Alternativdesigninformation für die Gruppe erfolgt. Dies ist insbesondere dann zweckmäßig, wenn bewertete erste Elektronikkomponenten aus ähnlichen oder sogar gleichen Gründen, beschrieben durch die Verfügbarkeitsinformation, mit hoher Wahrscheinlichkeit ausfallen.

Die wenigstens teilweise automatisiert erfolgende Anpassung der Auslegung ausgehend von der Basisdesigninformation kann selbstverständlich auch die Anpassung von physikalisch-technischen Designparametern, beispielsweise Größen (räumlichen Dimensionen), Strombedarf und dergleichen, umfassen. Dabei werden bevorzugt automatisch Abhängigkeiten von Komponenten des Elektronikprodukts untereinander selbstständig berücksichtigt, sowohl was weitere Elektronikkomponenten, als auch was sonstige Peripheriekomponenten angeht.

Allgemein gesprochen werden also die physikalisch-technischen Auswirkungen des Austauschs der ausgewählten ersten Elektronikkomponente zumindest teilweise automatisiert analysiert und durch physikalisch-technische Umgestaltung zum Erreichen der physikalisch-technischen Anforderungen entsprechend berücksichtigt. Hierbei wird insbesondere durch constraintsolving, beispielsweise mittels eines Konfigurator-Tools, sichergestellt, dass die Alternativvarianten ausgetauschter Komponenten technisch kompatibel sind bzw. zusammenpassen, so dass die Funktionsfähigkeit des Elektronikprodukts sichergestellt ist.

Die ermittelten Alternativdesigninformationen werden vorgehalten, sodass im Fall des Ausfalls einer ausgewählten ersten Elektronikkomponente, beispielsweise durch ein Lieferkettenproblem, schnell auf die alternative Auslegung mit der Austauschkomponente zurückgegriffen werden kann. Auf diese Weise kann die Herstellbarkeit des Elektronikprodukts verbessert sichergestellt werden, sodass insbesondere Liefertermine und dergleichen verlässlich eingehalten werden können. Die Skalierbarkeit der Herstellungsmenge an Elektronikprodukten ist verlässlicher möglich. Das Sicherstellungsverfahren kann, insbesondere in einer Form als Computerprogramm, in bereits bekannte, auf Elektronikprodukte bezogene Software-Anwendungen integriert werden. Beispielsweise sind Anwendungen, die sich auf das Lebenszyklus-Management von Elektronikprodukten beziehen, zu nennen, beispielsweise "Teamcenter PLM" der Firma Siemens AG. Auch kann das Sicherstellungsverfahren, insbesondere in seiner Form als Computerprogramm, zur Erweiterung und/oder Aufwertung von Anwendungen, die beim Design von Elektronikprodukten eingesetzt werden, verwendet werden, wie beispielsweise Konfiguratortools, Recommender-Anwendungen, Simulationstools und dergleichen. Auch Software-Anwendungen des sogenannten "generative engineering", beispielsweise Architektur-Generatoren, sind zu nennen.

Eine zweckmäßige Weiterbildung der vorliegenden Erfindung sieht vor, dass das Elektronikprodukt wenigstens eine Trägerkomponente für wenigstens einen Teil der Elektronikkomponenten aufweist, die wenigstens eine Leitung zur Verbindung der Elektronikkomponenten aufweist, wobei die Anpassung auf die geänderte Elektronikkomponente eine Anpassung der Leitungen der Trägerkomponente umfasst. Die Trägerkomponente kann insbesondere eine Leiterplatte und/oder ein sonstiger Schaltungsträger sein, die bzw. der mit wenigstens dem Teil der Elektronikkomponenten bestückt wird. Die Trägerkomponente kann, wie bereits dargelegt, selbst als Elektronikkomponente aufgefasst werden. Beispielsweise kann es sich um eine Leiterplatte (PCB) handeln, auf die als Elektronikkomponenten Bauteile, beispielsweise Chips, Kondensatoren, Transistoren und dergleichen, aufgebracht werden. Ändert sich nun beispielsweise die Schnittstelle eines Chips als ausgewählte, auszutauschende erste Elektronikkomponente, beispielsweise durch eine andere Belegung der Pins und/oder eine andere Anzahl der Pins bei der Austauschkomponente, ist bei der Nutzung von Leiterbahnen und dergleichen bei der Ankopplung des Chips auch eine Anpassung der Leiterplatte erforderlich. Ähnliches gilt selbstverständlich für andere, bekannte Trägerkomponenten, beispielsweise Trägerkomponenten, insbesondere Schaltungsträger, des 3D-Drucks.

Vorzugsweise kann das Elektronikprodukt als Elektronikkomponente und/oder weitere Komponente eine Peripheriekomponente umfassen, wobei die Anpassung an die geänderte Elektronikkomponente auch eine Veränderung wenigstens einer Peripheriekomponente zur Anpassung an eine geänderte Komponenteneigenschaft umfasst. Beispielsweise kann als Peripheriekomponente eine Stromversorgungskomponente angepasst werden, wenn die Austauschkomponente mehr oder weniger Strom bzw. elektrische Leistung benötigt. Ein größeres Speichermittel kann vorgesehen werden, wenn die Austauschkomponente (oder eine wegen dieser ausgetauschte weitere Komponente) mehr Speicherplatz benötigt. Auch kann die Wärmeentwicklung der Austauschkomponente berücksichtigt werden, um Kühleinrichtungen und dergleichen anzupassen. Mithin kann auch das Umfeld der Austauschkomponente neben der Wechselwirkung mit anderen Elektronikkomponenten adäquat berücksichtigt werden, um die robuste Funktion, insbesondere gemäß der Anforderungsinformation, des Elektronikprodukts herzustellen.

Konkret kann vorgesehen sein, dass zur Anpassung an die geänderte Elektronikkomponente, also die Austauschkomponente, eine Konfiguratorfunktion eines Konfiguratortools verwendet wird. Somit können Konfigurator-Technologien eingesetzt werden, um beispielsweise Abhängigkeiten der Elektronikkomponenten und/oder Peripheriekomponente zu berücksichtigen. Ein Konfiguratortool ist dabei als jede Software-Anwendung und/oder jeder Anteil einer Software-Anwendung zu verstehen, durch die automatisch zumindest Anteile einer elektrischen Verschaltung generiert werden können und/oder Elektronikkomponenten und/oder weitere Komponenten vorschlagen werden können, wobei insbesondere jeweils bzw. allgemein Abhängigkeiten von Komponenten untereinander berücksichtigt werden. Der Begriff umfasst mithin Architekturgeneratoren, Anwendungen des generative engineering, Recommender-Anwendungen und dergleichen.

Ferner ist es besonders zweckmäßig, wenn zur Ermittlung vorzunehmender Anpassungen wenigstens eine physikalische und/oder technische Simulation des Elektronikprodukts durchgeführt wird. Beispielsweise können Software-Anwendungen bereitgestellt werden, die Simulationen hinsichtlich verschiedener Betriebsaspekte bereitstellen können. So kann beispielsweise eine Simulation hinsichtlich der Wechselwirkung der Elektronikkomponenten und/oder hinsichtlich des Strombedarfs und/oder hinsichtlich der Wärmeentwicklung und/oder hinsichtlich auftretender Ströme und/oder Spannungen durchgeführt werden. Allgemein gesagt betrifft die Simulation also Aspekte, bei deren Änderung eine Anpassung der Auslegung notwendig werden kann. Wird beispielsweise durch eine Simulation festgestellt, dass eine höhere Wärmeentwicklung vorliegt, kann eine, insbesondere automatische, Anpassung einer Kühleinrichtung, die der ausgetauschten Komponente zugeordnet ist, erfolgen. Hierbei ist es zweckmäßig, zunächst die korrekte, gewünschte Funktionalität und Wechselwirkung zwischen den Elektronikkomponenten herzustellen, um danach, gegebenenfalls weitere, Peripheriekomponenten (falls notwendig) anzupassen. Durch Simulationen wird mithin eine Veränderung der Auslegung physikalisch-technisch analysiert, sodass die Simulationsergebnisse eine Grundlage zur Feststellung nötiger weiterer, bevorzugt automatisch durchzuführender Anpassungen bieten.

Es kann auch vorgesehen sein, dass bei der Anpassung an die geänderte Elektronikkomponente wenigstens eine benutzerseitige Anpassungsinformation verwendet wird. Eine derartige Anpassungsinformation kann beispielsweise Eingaben in ein Designprogramm und/oder Vorgaben umfassen. Insbesondere können aus der Anpassungsinformation Randbedingungen für die automatische Anpassung, insbesondere mittels einer Konfiguratorfunktion, die Abhängigkeiten der Elektronikkomponenten untereinander berücksichtigt, hergeleitet werden.

In einer zweckmäßigen, bevorzugten Weiterbildung kann vorgesehen sein, dass automatisch, insbesondere mittels der Konfiguratorfunktion und/oder der Simulation, wenigstens ein Anpassungsvorschlag ermittelt und nach Bestätigung durch einen Benutzer als wenigstens eine Alternativdesigninformation verwendet wird. Auf diese Weise findet die physikalisch-technische Analyse und ersatzweise Auslegung unter Austausch der jeweiligen ausgewählten ersten Elektronikkomponente zweckmäßigerweise vollständig automatisch statt. Diesbezüglich haben Untersuchungen gezeigt, dass insbesondere im Hinblick auf derlei Anpassungen, die ja gerade nicht das gesamte Elektronikprodukt "from scratch" betreffen, sondern überschaubare Auswirkungen eines Austauschs, auch von Software-Anwendungen, insbesondere Konfiguratorfunktionen und/oder Anwendungen des "generative engineering", qualitativ hochwertige Vorschläge automatisch bereitgestellt werden können. Nach einer entsprechenden Bestätigung durch den Benutzer kann der Anpassungsvorschlag dann unmittelbar als Alternativdesigninformation verwendet werden. Sollte ein solcher Vorschlag durch den Benutzer abgelehnt werden, kann diese Ablehnung auch als eine benutzerseitige Anpassungsinformation verstanden werden, die in die Ermittlung eines Alternativvorschlags, beispielsweise als Vorgabe und/oder Randbedingungen, eingehen kann.

In einem konkreten Beispiel kann beispielsweise dann, wenn ein, insbesondere als zentrales Bauteil vorgesehener, Grafikchip (GPU) eines Herstellers (als ausgewählte erste Elektronikkomponente) durch einen Grafikchip eines anderen Herstellers (als Austauschkomponente) ersetzt werden soll, eine Veränderung eines größeren Anteils des Schaltbildes resultieren. Rein beispielhaft kann durch eine andere Pin-Belegung ein anderes Layout einer gedruckten Leiterplatte als Trägerkomponente resultieren und es kann eine Anpassung von Peripheriekomponenten, beispielsweise hinsichtlich der benötigten elektrischen Leistung, der Kühlung und dergleichen notwendig sein. Auch können weitere Bauteile auf der gedruckten Leiterplatte auszutauschen sein. Trotz dieser Veränderungen liefert das Elektronikprodukt an den äußeren Schnittstellen der gedruckten Leiterplatte vergleichbare oder identische Funktionalitäten, beispielsweise für eine übergeordnete Vorrichtung, erfüllt also die Anforderungen.

In bevorzugter Weiterbildung der vorliegenden Erfindung kann vorgesehen sein, dass die Verfügbarkeitsinformation
- eine Historieninformation, die die Verfügbarkeit von ersten Elektronikkomponenten und/oder Austausch-Elektronikkomponenten für erste Elektronikkomponenten, die die gleiche interne Schnittstelle aufweisen, in der Vergangenheit beschreibt, und/oder
- eine Herstellungsinformation, die wenigstens einen Produzenten und/oder wenigstens einen Lieferanten und/oder die Zahl der Produzenten und/oder Lieferanten und/oder wenigstens einen Lieferweg und/oder wenigstens einen Herstellungsort und/oder wenigstens eine Herstellungsmenge beschreibt und/oder aus einer Produktdatenbank abgerufen wird,
umfasst.

Die Verfügbarkeitsbewertung kann also einerseits durch Sammeln und/oder Lernen von Verfügbarkeitsinformationen über vergangene Lieferkettenprobleme, also Historieninformation, ermittelt werden. Auch wenn vergangene Lieferkettenprobleme in der Zwischenzeit gelöst sein mögen, bleibt eine Vulnerabilität für die Zukunft, das bedeutet, es wird eine Übertragbarkeit der Schwachstellen aus der Vergangenheit auf die Zukunft angenommen. Andererseits kann auf Herstellungsinformation zugegriffen werden, die sich auf den aktuellen Zustand beziehen und beispielsweise beschreiben können, wie viele Produzenten und/oder Lieferanten vorliegen, ob die Elektronikkomponente nur in geringer Menge und/oder nur in wenigen Fabriken, also an wenigen Herstellungsorten, produziert wird, ob Produzenten und/oder Lieferanten aus Krisenländern oder eher stabilen Ländern stammen und dergleichen. Mithin wird insbesondere vorgeschlagen, sowohl Engpässe in der Vergangenheit zu analysieren als auch potentielle Risiken hinsichtlich der aktuellen Herstellung, der Transportwege und/oder der politischen Stabilität einzubeziehen. Es wird mithin ein möglichst viele Faktoren erfassender Prädiktionsansatz vorgeschlagen, der aus aktuellen und auf die Vergangenheit bezogenen Verfügbarkeitsinformationen Schlüsse hinsichtlich Risiken für die Zukunft auf einer robusten, verlässlichen Basis zieht.

In Ausführungsbeispielen kann zusätzlich auch eine benutzerseitige Experteninformation als Verfügbarkeitsinformation verwendet werden. In manchen Fällen kann ein Experte die aktuelle politische Lage und dergleichen verbessert einschätzen. In solchen Fällen ist es vorteilhaft, Fakten der Vergangenheit und der Gegenwart um eine benutzerseitige Zukunftsprädiktion zu ergänzen.

In einer konkreten Ausgestaltung kann vorgesehen sein, dass eine trainierte Prädiktionsfunktion, die als Eingangsdaten wenigstens eine Benennung der jeweiligen ersten Elektronikkomponente und/oder die Historieninformation nutzt, Ausgangsdaten, die eine aufgrund der Historie abgeschätzte Verfügbarkeitsprädiktion umfassen, ermittelt und die Ausgangsdaten zur Ermittlung der Verfügbarkeitsbewertung für die jeweilige erste Elektronikkomponente verwendet werden. Eine solche Prädiktionsfunktion kann beispielsweise aus bereits vorliegenden Historiendaten zu Elektronikkomponenten trainiert werden, indem ein zeitlicher Abschnitt, der am Ende des abgedeckten Zeitraums liegt, durch den davorliegenden zeitlichen Abschnitt prädiziert werden soll. Auf diese Weise kann durch maschinelles Lernen eine Detektion von Mustern und Korrelationen erreicht werden, die für eine Verfügbarkeitsprädiktion genutzt werden.

Hinsichtlich der Herstellungsinformation kann in konkreter Weiterbildung vorgesehen sein, dass bei einer geringeren Zahl von Herstellern und/oder Lieferanten und/oder bei einer geringeren Herstellungsmenge und/oder bei nur oder größtenteils aus einer vordefinierten Gruppe von Krisenländern stammenden Herstellern und/oder Lieferanten eine niedrigere Verfügbarkeitsbewertung ermittelt wird. Existieren für eine Elektronikkomponente nur sehr wenige Hersteller oder wird diese nur an sehr wenigen Herstellungsorten, beispielsweise in wenigen Fabriken, produziert, ist eine höhere Wahrscheinlichkeit für Lieferkettenprobleme anzunehmen als bei einer breiteren Verfügbarkeitsbasis. Zudem kann eine höhere Wahrscheinlichkeit für einen Ausfall angenommen werden, wenn alle Hersteller beispielsweise aus Krisenländern stammen. Auch bezüglich der Herstellungsinformation kann diese zunächst zu einem Zwischenergebnis führen, mithin einer Zwischeninformation, beispielsweise einer aufgrund der Herstellungsinformation gegebenen Nichtverfügbarkeitswahrscheinlichkeit.

Werden bei der Ermittlung der Verfügbarkeitsbewertungen mehrere getrennte Analyseprozesse verwendet, beispielsweise eine Verfügbarkeitsprädiktion aus einer Historieninformation ermittelt und eine Zwischeninformation aus einer Herstellungsinformation, gegebenenfalls zusätzlich eine benutzerseitige Experteninformation, so können diese Zwischenergebnisse als Vorabinformationen gewichtet zu der Verfügbarkeitsbewertung zusammengeführt werden. Eine benutzerseitige Experteninformation kann in konkreten Ausführungsbeispielen auch Gewichte für jeweils die Vorabinformationen der getrennten Analyseprozesse, beispielsweise für die Verfügbarkeitsprädiktion und die Zwischeninformation, beschreiben. In diesem Fall gibt also ein Experte die Gewichte vor. Möglich ist es in diesem Kontext jedoch auch, maschinelles Lernen einzusetzen, beispielsweise die Gewichte durch eine trainierte Gewichtsbestimmungsfunktion bereitzustellen. Gewichte können jedoch auch empirisch festgelegt sein. Allgemein gesprochen kann also vorgesehen sein, dass bei der Ermittlung der Verfügbarkeitsbewertung in einem ersten Schritt aus wenigstens einem Teil der Verfügbarkeitsinformation eine Vorabinformation, die prädizierte und/oder tatsächliche Verfügbarkeitsumstände beschreibt, ermittelt wird, wobei die Vorabinformation in einem zweiten Schritt zur Ermittlung der Verfügbarkeitsbewertung, insbesondere mittels der Experteninformation und/oder mittels einer trainierten Bewertungsfunktion, ausgewertet wird.

Eine konkrete Weiterbildung des Sicherstellungsverfahren kann vorsehen, dass die wenigstens eine Alternativdesigninformation, insbesondere hinsichtlich der Kosten und/oder des Aufwands und/oder der Verfügbarkeit zweiter Elektronikkomponenten, die von ersten Elektronikkomponenten unterschiedlich sind, im Vergleich zu der Basisdesigninformation und/oder wenigstens einer weiteren Alternativdesigninformation zur Ermittlung eines Zweckmäßigkeitswerts bewertet wird. Findet ein Vergleich mit der Basisdesigninformation statt, kann sogar vorgesehen sein, dass bei einem Zweckmäßigkeitswert, der eine höhere Zweckmäßigkeit als die Basisdesigninformation anzeigt, die entsprechende Alternativdesigninformation als neue Basisdesigninformation verwendet wird.

Allgemein gesprochen kann ein Zweckmäßigkeitswert eine Zusammenfassung mehrerer Kriterien, beispielsweise in gewichteter Form, sein. In den Zweckmäßigkeitswert können insbesondere die konkrete Umsetzung der jeweiligen Designinformation betreffende Kriterieninformationen eingehen, beispielsweise eine Kosteninformation, eine Aufwandsinformation, eine Verbrauchsinformation, eine Nachhaltigkeitsinformation und dergleichen. Beispielsweise kann der Zweckmäßigkeitswert ein Cost-Benefit-Rating sein.

Der Zweckmäßigkeitswert kann im Rahmen der vorliegenden Erfindung in besonders vorteilhafter Ausgestaltung dann eingesetzt werden, wenn zu einer ausgewählten ersten Elektronikkomponente mehrere Alternativdesigninformationen ermittelt werden, von denen wenigstens eine zum Vorhalt ausgewählt werden soll. Hierbei kann in einer bevorzugten Weiterbildung vorgesehen sein, dass bei mehreren Alternativdesigninformationen für dieselbe ausgewählte erste Elektronikkomponente jede Alternativdesigninformation, insbesondere hinsichtlich der Kosten und/oder des Aufwands und/oder der Verfügbarkeit zweiter Elektronikkomponenten, die von ersten Elektronikkomponenten unterschiedlich sind, im Vergleich zu der Basisdesigninformation und/oder wenigstens einer weiteren Alternativdesigninformation zur Ermittlung eines Zweckmäßigkeitswerts bewertet wird, wobei eine vorbestimmte Anzahl der gemäß dem Zweckmäßigkeitswert am besten bewerteten Alternativdesigninformationen für diese ausgewählte erste Elektronikkomponente ausgewählt und der Rest verworfen wird. Um den Aufwand in Grenzen zu halten, werden mithin einige wenige vorzuhaltende alternative Auslegungen für eine definierte Funktionalität vorgeschlagen. Hierfür werden zweckmäßigerweise die möglichen Alternativdesigninformationen bezüglich verschiedener Kriterien, insbesondere hinsichtlich der Kosten, des Aufwands, der Nachhaltigkeit und/oder der Verfügbarkeit, bewertet, wobei die zur Ermittlung des Zweckmäßigkeitswerts genutzten Kriterien dieselben sein können, die auch der Ermittlung der Basisdesigninformation zugrundelagen. Auf diese Weise werden sozusagen die "nächstbesseren" Varianten bezüglich des Austauschs der ausgewählten ersten Elektronikkomponente festgestellt und zum Vorhalt ausgewählt. Auf diese Weise wird den Kriterien auch bei Nichtverfügbarkeit einer ersten Elektronikkomponente möglichst weitgehend Rechnung getragen, insbesondere Kosten und/oder Aufwand vermieden. Dabei sei darauf hingewiesen, dass es bereits aus dem Grund zweckmäßig sein kann, für eine ausgewählte erste Elektronikkomponente mehrere Alternativdesigninformationen vorzuhalten, dass sich die Bewertung, mithin der Zweckmäßigkeitswert, oder sogar die Kriterien über die Zeit ändern können, sodass gegebenenfalls zu dem Zeitpunkt, zu dem eine Alternativdesigninformation benötigt wird, eine andere als die zum Zeitpunkt der Ermittlung am besten bewertete Alternativdesigninformation zweckmäßiger ist. Die vorbestimmte Anzahl kann beispielsweise zwei bis zehn, in einem konkreten Ausführungsbeispiel fünf, betragen.

In einer besonders bevorzugten Weiterbildung der vorliegenden Erfindung kann vorgesehen sein, dass jede Alternativdesigninformation auch eine Steuerinformation zur Ansteuerung einer Herstellungsvorrichtung zur automatisierten Herstellung des Elektronikprodukts gemäß der Alternativdesigninformation umfassend ermittelt wird. Auch die Steuerinformation der Alternativdesigninformation wird mit besonderem Vorteil wenigstens teilweise, insbesondere vollständig, automatisch ermittelt, insbesondere ausgehend von der Steuerinformation für die Basisdesigninformation. Eine derartige automatische Anpassung der durch die Steuerinformation beschriebenen Anweisungen an die Herstellungsvorrichtung ist aufgrund der bekannten physikalisch-technischen Unterschiede, die durch den Austausch der ausgewählten ersten Elektronikkomponente entstehen, möglich. Dies gilt insbesondere für Bestückungsautomaten der Herstellungsvorrichtung, denen die veränderten Komponenten und/oder gegebenenfalls veränderte Positionen, umfassend Orientierungen, mitgeteilt werden können, und/oder für Druckeinrichtungen für Trägerkomponenten, beispielsweise Leiterplatten. Die Steuerinformationen können insbesondere als Steuerprogramme, beispielsweise für eine Fertigungslinie der Herstellungsvorrichtung, ausgebildet sein.

Neben dem Sicherstellungsverfahren betrifft die vorliegende Erfindung auch ein Herstellungsverfahren. Das Verfahren zur Herstellung von Elektronikprodukten, wobei jedes Elektronikprodukt durch eine Anforderungsinformation beschrieben wird, die Anforderungen an wenigstens eine äußere Schnittstelle und/oder wenigstens eine bereitzustellende Funktionalität beschreibt, weist folgende Schritte auf:
- Bereitstellen einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt, und wenigstens einer gemäß einem erfindungsgemäßen Sicherstellungsverfahren bereitgestellten Alternativdesigninformation für wenigstens eine ausgewählte erste Elektronikkomponente,
- Herstellen der Elektronikprodukte gemäß der Basisdesigninformation,
- Überprüfen der Erfüllung einer Umstellungsbedingung, die anzeigt, dass wenigstens eine der wenigstens einen ausgewählten ersten Elektronikkomponente nicht oder ab einem Zeitpunkt in der Zukunft nicht verfügbar ist,
- bei Erfüllung der Umstellungsbedingung für eine erste Elektronikkomponente Auswahl einer der wenigstens einen Alternativdesigninformation, die dieser ersten Elektronikkomponente zugeordnet ist und für die alle zweiten Elektronikkomponenten zumindest auch nach dem Zeitpunkt verfügbar sind, und Herstellen der Elektronikprodukte gemäß der Alternativdesig ni nformation.

Sämtliche Ausführungen bezüglich des erfindungsgemäßen Sicherstellungsverfahrens lassen sich analog auf das erfindungsgemäße Herstellungsverfahren übertragen und umgekehrt, sodass auch mit dem Herstellungsverfahren die bereits genannten Vorteile erhalten werden können.

Das Herstellungsverfahren beschreibt den konkreten Einsatz der Alternativdesigninformation. Wird bei der Herstellung des Elektronikprodukts gemäß der Basisdesigninformation, insbesondere unter Verwendung einer darin enthaltenen Steuerinformation, festgestellt, dass ein Lieferkettenproblem bezüglich einer der ausgewählten ersten Elektronikkomponenten auftritt oder bevorsteht, insbesondere diese ausgewählte erste Elektronikkomponente nicht mehr verfügbar ist oder sein wird, kann aufgrund der wenigstens einen Alternativdesigninformation für diese ausgewählte erste Elektronikkomponente schnell und einfach auf die entsprechende alternative Auslegung zurückgegriffen werden und das Elektronikprodukt trotz des Lieferkettenproblems weiter gemäß den Anforderungen der Anforderungsinformation hergestellt werden. Dabei wird eine ausgewählte erste Elektronikkomponente auch dann als nicht verfügbar angesehen, wenn diese nicht in ausreichender Menge für die gewünschte Menge herzustellender Elektronikprodukte vorliegt.

Um die Umstellung besonders einfach und schnell zu ermöglichen, sieht eine zweckmäßige Weiterbildung der vorliegenden Erfindung vor, dass für jede Alternativdesigninformation jede zweite Elektronikkomponente, die sich von den ersten Elektronikkomponenten unterscheidet, und/oder eine gegenüber der Basisdesigninformation veränderte Trägerkomponente und/oder wenigstens eine gegenüber der Basisdesigninformation geänderte Peripheriekomponente am Herstellungsort vorgehalten wird. Mit anderen Worten ist vorgesehen, sowohl die alternativen Elektronikkomponenten, insbesondere auch modifizierte Trägerkomponenten, als auch sonstige alternative Komponenten, insbesondere Peripheriekomponenten, zumindest in gewisser Menge bereits am Herstellungsort vorzuhalten, sodass sozusagen "on demand" auf die Herstellung gemäß einer entsprechenden Alternativdesigninformation umgestellt werden kann. Insbesondere dann, wenn als Teil der Alternativdesigninformation auch eine Steuerinformation für die verwendete Herstellungsvorrichtung vorliegt, ist dies insbesondere - bis auf gegebenenfalls eine Bestätigung durch einen Benutzer - vollständig automatisch möglich. Anders gesagt können zweckmäßig die Basisdesigninformation und/oder die Alternativdesigninformation eine Steuerinformation umfassen, mit der eine Herstellungsvorrichtung, insbesondere umfassend eine Bestückungseinrichtung (Bestückungsautomat), automatisch angesteuert wird.

Wird mithin im laufenden Herstellungsbetrieb zu einem bestimmten Zeitpunkt festgestellt, dass die bevorzugte Variante gemäß der Basisdesigninformation nur noch für eine bestimmte Zeit hergestellt werden kann und keine Nachlieferung einer ersten Elektronikkomponente, zumindest nicht in der erforderlichen Menge, möglich ist, ist also die Umstellungsbedingung erfüllt, kann die Produktion sofort, nach der bestimmten Zeit oder aber zu einem Zeitpunkt dazwischen, automatisch, insbesondere nach einer Bestätigung durch einen Benutzer (dann sozusagen auf Knopfdruck), umgestellt werden. So wird eine unterbrechungsfreie Produktion ermöglicht. Dabei kann die Umstellung so erfolgen, dass noch eine gewisse Menge der veränderten ersten Komponenten der Basisdesigninformation erhalten bleiben, sodass diese letztlich ebenso zu einer dann, wenn die nicht verfügbare ausgewählte erste Elektronikkomponente wieder verfügbar ist, schnell wieder nutzbaren Alternativdesigninformation wird. Allgemein gesprochen kann selbstverständlich im Rahmen des Herstellungsverfahrens auch eine Rückstellungsbedingung vorgesehen werden, die dann, wenn gemäß einer Alternativdesigninformation produziert wird, überprüft, ob die als Ursache der Umstellung auf die Alternativdesigninformation ausgefallene ausgewählte erste Elektronikkomponente wieder in hinreichender Menge verfügbar ist oder sein wird, sodass bei Erfüllung der Rückstellungsbedingungen wieder auf die Herstellung gemäß der Basisdesigninformation umgestellt werden kann.

In einer Weiterbildung des Herstellungsverfahrens kann vorgesehen sein, dass bei mehreren einer ausgewählten ersten Elektronikkomponente zugeordneten Alternativdesigninformationen jede Alternativdesigninformation im Vergleich zu den jeweiligen anderen Alternativdesigninformationen, insbesondere hinsichtlich einer aktuellen, Kosten und/oder Aufwand beschreibenden Realisierungsinformation, bewertet wird und die am besten bewertete Alternativdesigninformation ausgewählt wird. Dabei kann zur Bewertung auch hier der (dann aktualisierte) Zweckmäßigkeitswert bestimmt werden. Es wird mithin vorgeschlagen, aufgrund einer aktuellen Realisierungsinformation, die wenigstens ein Kriterium zur Bewertung betrifft, die mehreren Alternativdesigninformationen nach aktuellem Stand zu bewerten und somit die nach aktuellem Stand geeignetste Alternativdesigninformation auszuwählen, um die Produktion fortzusetzen. Auf diese Weise können Kosten und/oder Aufwand für die Umstellung möglichst gering gehalten werden. Beispielsweise kann auch hier ein Cost-Benefit-Rating zur Bewertung verwendet werden. Dabei sei an dieser Stelle nochmals darauf hingewiesen, dass Grundvoraussetzung für die Anwendung einer Alternativdesigninformation selbstverständlich ist, dass alle zweiten Elektronikkomponenten und sonstigen Komponenten gemäß dieser Alternativdesigninformation auch verfügbar, insbesondere lieferbar, sind. Mithin ist eine Bewertung bevorzugt auf die Alternativdesigninformationen beschränkt, für die auch alle Komponenten tatsächlich in hinreichender Menge verfügbar sind.

Ein erfindungsgemäßes Vorbereitungssystem zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, weist eine Recheneinrichtung auf, welche umfasst:
- eine Schnittstelle zum Empfang einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt,
- eine Bewertungseinheit zum Bewerten der zukünftigen Verfügbarkeit wenigstens eines Teils der ersten Elektronikkomponenten in Abhängigkeit wenigstens einer Verfügbarkeitsinformation zur Ermittlung jeweiliger Verfügbarkeitsbewertungen für die bewerteten ersten Elektronikkomponenten,
- eine Auswahleinheit zur Auswahl wenigstens einer gemäß der Verfügbarkeitsbewertung am schlechtesten bewerteten ersten Elektronikkomponente,
- eine Ermittlungseinheit zur Ermittlung, für jede ausgewählte erste Elektronikkomponente, wenigstens einer Alternativdesigninformation, die eine zweite Auslegung des Elektronikprodukts mit mehreren miteinander über zweite interne Schnittstellen wechselwirkenden zweiten Elektronikkomponenten beschreibt, indem wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt wird und danach die restliche Auslegung unter Einhaltung der Anforderungen gemäß der Anforderungsinformation auf die geänderte Elektronikkomponente angepasst wird, und
- ein Speichermittel zum Vorhalten der wenigstens einen Alternativdesigninformation.

Anders gesagt ist das Vorbereitungssystem zur Durchführung des erfindungsgemäßen Sicherstellungsverfahrens ausgebildet. Mithin lassen sich die Ausführungen bezüglich der Verfahren wiederum analog übertragen und umgekehrt. Die Recheneinrichtung weist insbesondere wenigstens einen Prozessor und wenigstens ein Speichermittel auf. Durch Hardware und/oder Software werden Funktionseinheiten gebildet, um Schritte des erfindungsgemäßen Sicherstellungsverfahren durchzuführen. Neben den genannten Funktionseinheiten können auch weitere Funktionseinheiten vorgesehen sein, um Schritte vorteilhafter Ausbildungen des Sicherstellungsverfahrens umzusetzen.

Eine erfindungsgemäße Herstellungsvorrichtung zur Herstellung von Elektronikprodukten weist eine Steuereinrichtung auf, die zur Durchführung eines erfindungsgemäßen Herstellungsverfahrens ausgebildet ist. Auch hierauf lassen sich sämtliche Ausführungen zu den sonstigen Gegenständen übertragen. Die Herstellungsvorrichtung weist insbesondere wenigstens eine Herstellungskomponente, beispielsweiseeine Druckeinrichtung, eine Bestückungseinrichtung, eine Beschichtungseinrichtung und dergleichen, auf, welche durch die Steuereinrichtung, insbesondere gemäß einer Steuerinformation, die in einer jeweiligen Designinformation enthalten ist, angesteuert werden können. In Ausführungsbeispielen kann die Herstellungsvorrichtung auch ein erfindungsgemäßes Vorbereitungssystem enthalten.

Auch die Steuereinrichtung weist bevorzugt wenigstens einen Prozessor und wenigstens ein Speichermittel auf. Durch Hardware und/oder Software können Funktionseinheiten gebildet werden, um Schritte des erfindungsgemäßen Herstellungsverfahrens umzusetzen. Beispielsweise kann die Steuereinrichtung umfassen:
- eine Schnittstelle zum Empfang einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt, und wenigstens einer gemäß einem erfindungsgemäßen Sicherstellungsverfahren bereitgestellten Alternativdesigninformation für wenigstens eine ausgewählte erste Elektronikkomponente,
- eine Steuereinheit zum Ansteuern wenigstens einer Herstellungskomponente der Herstellungsvorrichtung zum Herstellen der Elektronikprodukte gemäß der Basi sdesigni nformation,
- eine Überprüfungseinheit zum Überprüfen der Erfüllung einer Umstellungsbedingung, die anzeigt, dass wenigstens eine der wenigstens einen ausgewählten ersten Elektronikkomponente nicht oder ab einem Zeitpunkt in der Zukunft nicht verfügbar ist,
- eine Auswahleinheit zur, bei Erfüllung der Umstellungsbedingung für eine erste Elektronikkomponente, Auswahl einer der wenigstens einen Alternativdesigninformation, die dieser ersten Elektronikkomponente zugeordnet ist und für die alle zweiten Elektronikkomponenten zumindest auch nach dem Zeitpunkt verfügbar sind,
- wobei die Steuereinheit zur Ansteuerung der Herstellungskomponente zum Herstellen der Elektronikprodukte gemäß der ausgewählten Alternativdesigninformation nach Erfüllung der Umstellungsbedingung ausgebildet ist.

Ein erfindungsgemäßes Sicherstellungs-Computerprogramm ist direkt in ein Speichermittel einer Recheneinrichtung eines Vorbereitungssystems ladbar und weist Programmmittel derart auf, dass bei Ausführung des Computerprogramms auf der Recheneinrichtung diese veranlasst wird, die Schritte eines erfindungsgemäßen Sicherstellungsverfahrens durchzuführen. Das Sicherstellungs-Computerprogramm kann auf einem elektronisch lesbaren Sicherstellungs-Datenträger gespeichert sein, welcher mithin darauf gespeicherte Steuerinformationen aufweist, die wenigstens ein erfindungsgemäßes Sicherstellungs-Computerprogramm enthalten und derart ausgestaltet sind, dass bei Verwendung des Datenträgers in einer Recheneinrichtung eines Vorbereitungssystems diese ausgebildet wird, ein erfindungsgemäßes Sicherstellungsverfahren auszuführen.

Ein erfindungsgemäßes Herstellungs-Computerprogramm ist direkt in ein Speichermittel einer Steuereinrichtung einer Herstellungsvorrichtung ladbar und weist Programmmittel derart auf, dass bei Ausführung des Computerprogramms auf der Steuereinrichtung diese veranlasst wird, die Schritte eines erfindungsgemäßen Herstellungsverfahrens durchzuführen. Das Herstellungs-Computerprogramm kann auf einem elektronisch lesbaren Herstellungs-Datenträger gespeichert sein, welcher mithin darauf gespeicherte Steuerinformationen aufweist, die wenigstens ein erfindungsgemäßes Herstellungs-Computerprogramm enthalten und derart ausgestaltet sind, dass bei Verwendung des Datenträgers in einer Steuereinrichtung einer Herstellungsvorrichtung diese ausgebildet wird, ein erfindungsgemäßes Herstellungsverfahren auszuführen.

Bei den beschriebenen elektronisch lesbaren Datenträgern handelt es sich bevorzugt um nichttransiente Datenträger, beispielsweise eine CD-ROM.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan eines Ausführungsbeispiels des erfindungsgemäßen Sicherstellungsverfahrens,
- Fig. 2: einen Ablaufplan eines Ausführungsbeispiels des erfindungsgemäßen Herstellungsverfahrens,
- Fig. 3: eine Prinzipskizze eines erfindungsgemäßen Vorbereitungssystems,
- Fig. 4: eine Prinzipskizze einer erfindungsgemäßen Herstellungsvorrichtung, und
- Fig. 5: den funktionalen Aufbau einer Steuereinrichtung der Herstellungsvorrichtung.

Im Folgenden werden Ausführungsbeispiele der erfindungsgemäßen Verfahren mit Bezug auf ein Input-Output-Modul für ein Steuerungssystem beschrieben. Das ein Elektronikprodukt bildende Input-Output-Modul ist als eine Einsteckkarte ausgebildet, die Analog-Digital-Wandler als wesentliche Elektronikkomponente umfasst. Die Analog-Digital-Wandler werden als ein IC (Chip) bereitgestellt, der eine Elektronikkomponente des Input-Output-Moduls bildet. Elektronikkomponenten des Input-Output-Moduls sind auf einer gedruckten Leiterplatte (Platine) als Trägerkomponente angeordnet. Das Elektronikprodukt soll hierbei Anforderungen gemäß einer Anforderungsinformation erfüllen, welche die Funktionalität und wenigstens eine äußere Schnittstelle betreffen.

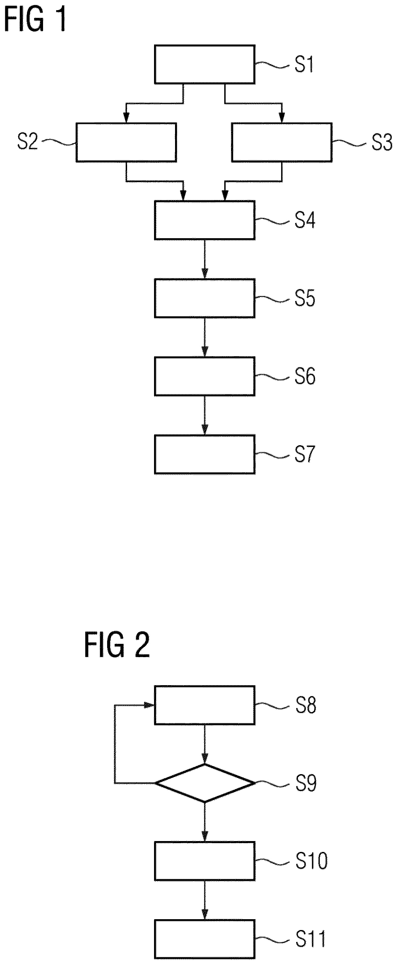

Fig. 1 zeigt einen Ablaufplan eines entsprechenden Ausführungsbeispiels eines erfindungsgemäßen computerimplementierten Sicherstellungsverfahrens, wie es durch eine Recheneinrichtung eines Vorbereitungssystems durchgeführt wird. Dabei wird in einem Schritt S1 eine Basisdesigninformation bereitgestellt, die eine Auslegung des Input-Output-Moduls beschreibt, die durch einen grundlegenden Designprozess ermittelt wurde, beispielsweise unter Verwendung von bestimmten auf die Kosten, den Aufwand und dergleichen bezogenen Kriterien. Die Auslegung gemäß der Basisdesigninformation beschreibt erste Elektronikkomponenten, die über erste interne Schnittstellen miteinander wechselwirken. Neben dem bereits beschriebenen, die Analog-Digital-Wandler bereitstellenden Chip können auch weitere, als elektronische Bauteile vorgesehene Funktions-Elektronikkomponenten vorgesehen sein, beispielsweise Transistoren, Kondensatoren, Widerstände, andere Chips und dergleichen.

In einer Schrittgruppe S2 bis S4 wird nun wenigstens ein Teil der ersten Elektronikkomponenten, vorliegend bevorzugt alle ersten Elektronikkomponenten, hinsichtlich ihrer Verfügbarkeit bei der Herstellung des Elektronikprodukts bewertet, sodass den ersten Elektronikkomponenten eine Verfügbarkeitsbewertung zugeordnet wird. Dabei wird von Verfügbarkeitsinformationen zu den jeweiligen ersten Elektronikkomponenten ausgegangen, die sich bevorzugt auch auf potentielle Ersatzkomponenten bzw. Austausch-Elektronikkomponenten beziehen, die dieselbe erste interne Schnittstelle aufweisen.

Vorliegend umfassen die Verfügbarkeitsinformationen eine Historieninformation, die die Verfügbarkeit der ersten Elektronikkomponente (und bevorzugt der Austausch-Elektronikkomponenten) in der Vergangenheit beschreibt, und eine Herstellungsinformation, die wenigstens einen Produzenten, wenigstens einen Lieferanten, die Zahl der Produzenten und Lieferanten, wenigstens einen Lieferweg, wenigstens einen Herstellungsort und wenigstens eine Herstellungsmenge beschreibt. Die Herstellungsinformation kann beispielsweise aus einer Produktdatenbank abgerufen werden. Im vorliegenden Ausführungsbeispiel wird nun in den Schritten S2 und S3 jeweils für die Historieninformation und die Herstellungsinformation eine Vorabinformation, die prädizierte und/oder tatsächliche Verfügbarkeitsumstände beschreibt, ermittelt. Mit anderen Worten wird die Historieninformation beispielsweise hinsichtlich von Lieferkettenproblemen in der Vergangenheit ausgewertet, aus denen eine Verfügbarkeitsprädiktion unter der Annahme hergeleitet wird, dass derartige Lieferkettenprobleme auch in der Zukunft auftreten können. Hierbei ist es denkbar, jedoch nicht zwangsläufig erforderlich, eine trainierte Prädiktionsfunktion einzusetzen, die beispielsweise die Historieninformation als Eingangsdaten verwenden kann. Hinsichtlich der Herstellungsinformation wird diese insbesondere derart ausgewertet, dass bei einer geringeren Zahl von Herstellern und/oder Lieferanten und/oder bei einer geringeren Herstellungsmenge und/oder bei nur oder größtenteils aus einer vordefinierten Gruppe von Krisenländern stammenden Herstellern und/oder Lieferanten eine Vorabinformation ermittelt wird, die eine niedrigere Verfügbarkeit anzeigt. Hinsichtlich der Lieferwege kann beispielsweise überprüft werden, ob der Lieferweg durch eine Art Nadelöhr, beispielsweise einen störungsanfälligen Wasserkanal, führt.

In einem Schritt S4 werden zur Ermittlung der Verfügbarkeitsbewertung die Vorabinformationen der Schritte S2 und S3 gewichtet zusammengeführt, wobei die Gewichtung beispielsweise fest vorgegeben oder durch einen menschlichen Experten festgelegt werden kann.

Im konkret vorliegenden Fall wird festgestellt, dass der Chip mit den Analog-Digital-Wandlern mit der vorgegebenen Spezifikation nicht zuverlässig in hinreichender Menge lieferbar sein wird, auch nicht von einem pin-kompatiblen Drittanbieter. Auch andere erste Elektronikkomponenten können eine schlechtere Verfügbarkeitsbewertung erhalten.

Es sei an dieser Stelle noch angemerkt, dass die Ermittlung der Verfügbarkeitsbewertungen in den Schritten S2 bis S4 auch bereits vorab erfolgt sein kann und die Verfügbarkeitsbewertungen beispielsweise in einer Datenbank oder dergleichen, insbesondere für eine Software-Anwendung, gespeichert sein können. Sie werden dann entsprechend regelmäßig aktualisiert und können auch bereits im grundlegenden Designprozess herangezogen werden, beispielsweise zur Ausgabe eines Hinweises bei schlecht verfügbaren Elektronikkomponenten und/oder als zusätzliches Kriterium bei der Beurteilung von Kandidaten für die Basisdesigninformation. Dann werden sie im hier beschriebenen Sicherstellungsverfahren aus der entsprechenden Datenbank abgerufen.

In einem Schritt S5 wird basierend auf den Verfügbarkeitsbewertungen eine vordefinierte Zahl von am schlechtesten bewerteten Elektronikkomponenten ausgewählt, beispielsweise drei bis sechs. Denkbar ist es auch, einen Schwellwert für die Verfügbarkeitsbewertung einzusetzen, um alle ersten Elektronikkomponenten auszuwählen, die besonders anfällig für Verfügbarkeitsprobleme scheinen. Im vorliegenden Ausführungsbeispiel ist auch der Chip, der die Analog-Digital-Wandler bereitstellt, eine derartige ausgewählte erste Elektronikkomponente.

In einem Schritt S6 wird dann für jede ausgewählte erste Elektronikkomponente wenigstens eine Alternativdesigninformation ermittelt, die eine zweite Auslegung des Elektronikprodukts mit mehreren miteinander über zweite interne Schnittstellen wechselwirkenden zweiten Elektronikkomponenten beschreibt. Hierzu wird zunächst wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt. Hierzu können beispielsweise grundsätzliche dieselbe Wirkung bereitstellende Kandidatenkomponenten mittels eines Vergleichsmaßes bewertet werden und beispielsweise die Kandidatenkomponenten als die wenigstens eine Austauschkomponente gewählt werden, die am wenigstens Zusatzkosten, am wenigsten Zusatzaufwand verursacht und/oder technisch am ähnlichsten ist/sind. Alternativ können alle denkbaren Austauschkomponenten berücksichtigt werden, um darauf basierend entsprechende Anpassungen vorzunehmen.

Nach Ersetzung der ausgewählten ersten Elektronikkomponente durch die Austauschkomponente wird die restliche Auslegung unter Einhaltung der Anforderungen gemäß der Anforderungsinformation auf die geänderte Elektronikkomponente angepasst. Dies geschieht vorliegend zumindest größtenteils, insbesondere vollständig, automatisch, indem zum einen zur Ermittlung vorzunehmender Anpassungen wenigstens eine Simulation des Elektronikprodukts durchgeführt wird, zum anderen eine Konfiguratorfunktion eines Konfiguratortools verwendet wird. Das Konfiguratortool kann dabei eine oder zumindest Teil einer Software-Anwendung sein, beispielsweise einer Software-Anwendung des "generative engineering" und/oder ein Architekturgenerator und/oder eine Recommender-Anwendung. Die Simulation, welche auch durch eine solche Software-Anwendung bereitgestellt werden kann, kann beispielsweise die thermische Entwicklung, Spannungs- und/oder Stromspitzen und dergleichen betreffen.

Im vorliegenden Fall wurde festgestellt, dass als Ersatz für den Chip in einer Variante ein anderer, zuverlässig lieferbarer Chip als Austauschkomponente bereitsteht, der allerdings mehr Analog-Digital-Wandler bereitstellt, als für das Input-Output-Modul erforderlich sind. Er weist dementsprechend eine andere interne Schnittstelle auf, ist somit nicht pin-kompatibel. Die Austauschkomponente erfüllt die Spezifikation bezüglich der Analog-Digital-Wandlung, hat jedoch aufgrund der Größe einen höheren Strombedarf, der von der Stromversorgungskomponente auf der Leiterplatte geleistet werden muss. Mithin wird die Stromversorgungskomponente im Zug der Anpassung modifiziert, was vorliegend jedoch durch ein pin-kompatibles Bauteil gelöst werden kann, mithin keine weiteren Änderungen erforderlich macht. Eine Simulation zur Wärmeentwicklung ergibt keinen Änderungsbedarf hinsichtlich der Kühleinrichtung, beispielsweise einer Belüftung. Schließlich wird noch eine alternative Auslegung der Leiterplatte derart ermittelt, dass der geänderten Schnittstelle Rechnung trägt.

Entsprechend können weitere Alternativdesigninformationen für andere Austauschkomponenten ermittelt werden. Aus diesen wird letztendlich, beispielsweise aufgrund eines bewertenden Zweckmäßigkeitswerts, eine vorbestimmte Anzahl, beispielsweise fünf, ausgewählt und die restlichen werden verworfen. Der Zweckmäßigkeitswert ist im vorliegenden Ausführungsbeispiel ein Cost-Benefit-Rating.

Im Zuge dieser Ermittlung von Alternativdesigninformationen wird zumindest zu den nicht verworfenen Alternativdesigninformationen auch eine Steuerinformation ermittelt, gemäß der eine Herstellungsvorrichtung für das Input-Output-Modul derart ansteuerbar ist, dass das Input-Output-Modul gemäß der entsprechenden Alternativdesigninformation hergestellt wird.

Zusammenfassend enthält jede Alternativdesigninformation für das oben diskutierte konkrete Beispiel mithin
- eine alternative Auslegung der Leiterplatte mit einer passenden Leitungsführung für die Austauschkomponente, im konkreten Beispiel den eine größere Anzahl von Analog-Digital-Wandlern bereitstellenden Chip, wobei diese alternative Auslegung als Steuerinformation für die Leiterplattenherstellung digital vorliegt,
- eine Alternative in der Programmierung der automatischen Bestückung zur Verarbeitung der Austauschkomponente, also des größeren Chips, ebenso als Steuerinformation, und
- eine Alternative in der Programmierung der automatischen Bestückung zum Ersatz der Stromversorgungskomponente durch das pin-kompatible, leistungsstärkere Bauteil, ebenso als Steuerinformation.

Die nicht verworfenen Alternativdesigninformationen für alle ausgewählten ersten Elektronikkomponenten werden in einem Schritt S7 in einem Speichermittel gespeichert.

Fig. 2 zeigt nun einen Ablaufplan eines Herstellungsverfahrens zur Herstellung des Input-Output-Moduls. In einer Steuereinrichtung einer Herstellungsvorrichtung liegen hierbei die Basisdesigninformation und die Alternativdesigninformationen bereits vor, nachdem sie entsprechend bereitgestellt wurden. Die Herstellungsvorrichtung umfasst vorliegend eine Druckeinrichtung für die Leiterplatte und eine Bestückungseinrichtung, beispielsweise einen Bestückungsautomaten, für die Bestückung mit Elektronikkomponenten und/oder Peripheriekomponenten. Vorliegend werden in der Herstellungsvorrichtung für alle Alternativdesigninformationen zweckmäßigerweise unterschiedliche Elektronik- und/oder Peripheriekomponenten bereits in einer gewissen, gegebenenfalls kleineren Menge vorgehalten.

In einem Schritt S8 wird dann das Elektronikprodukt, also das Input-Output-Modul, gemäß der Basisdesigninformation hergestellt. Dabei wird in einem Schritt S9 überprüft, ob eine Umstellungsbedingung erfüllt ist, die anzeigt, dass ab dem jetzigen Zeitpunkt und/oder zu einem Zeitpunkt in der Zukunft eine der ausgewählten ersten Elektronikkomponenten, beispielsweise der die Analog-Digital-Wandler bereitstellende Chip, nicht länger verfügbar sein wird, beispielsweise aufgrund von Lieferkettenproblemen.

Vorliegend kann in einem konkreten Fall zur Erläuterung beispielsweise festgestellt werden, dass die bevorzugte Variante nur noch für die Produktion der nächsten zehn Tage Chips in ausreichender Menge auf Lager hat und keine Nachlieferung in Aussicht ist. Dann ist die Umstellungsbedingung erfüllt und es wird mit dem Schritt S10 fortgefahren, in dem eine Alternativdesigninformation ausgewählt wird.

Hierzu werden die für die ausgefallene erste Elektronikkomponente vorliegenden Alternativdesigninformationen, für die alle Komponenten in ausreichender Menge lieferbar sind, zunächst wiederum mittels eines Cost-Benefit-Ratings als Zweckmäßigkeitswert bewertet, wobei aktuelle Preise als Realisierungsinformation eingehen. Im dargelegten Ausführungsbeispiel werden jedoch auch Verfügbarkeitsbewertungen, gegebenenfalls neu ermittelt, eingesetzt, um in den Zweckmäßigkeitswert einzugehen. Dies kann beispielsweise zur Folge haben, dass bei Austauschkomponenten, die aus einem Land stammen, das inzwischen als Krisenland gilt, der Zweckmäßigkeitswert eine geringere Zweckmäßigkeit anzeigt als für Austauschkomponenten, die aus einem Nicht-Krisenland stammen. Die oben konkret beschriebene alternative Auslegung wird dann ausgewählt, wenn die dazugehörigen ausgetauschten Bauteile (alternativer Chip, alternative Stromversorgungskomponente) lieferbar sind und das beste Cost-Benefit-Rating vorliegt, beispielsweise keine sonstige Alternative gemäß einer anderen Alternativdesigninformation kostengünstiger ist und die Austauschkomponente auch eine hinreichend hohe Verfügbarkeitsbewertung hat.

Nach dieser Auswahl wird in einem Schritt S11, beispielsweise nach den zehn Tagen, gegebenenfalls aber auch früher, die Produktion des Input-Output-Moduls auf die ausgewählte Alternativdesigninformation umgestellt, gegebenenfalls nach einer Bestätigung durch einen Benutzer ("auf Knopfdruck"). Dabei werden die entsprechenden Steuerinformationen eingesetzt. Im oben konkret dargelegten Beispiel bedeutet dies:
- Die Druckeinrichtung wird angesteuert, um die modifizierte Leiterplatte zu drucken und bereitzustellen, und
- der Bestückungsautomat wird angesteuert, den alternativen Chip mit mehr Analog-Digital-Wandlern einzusetzen sowie die alternative Stromversorgungskomponente aufzubringen.

Auf diese Weise ist eine unterbrechungsfreie Produktion gewährleistet.

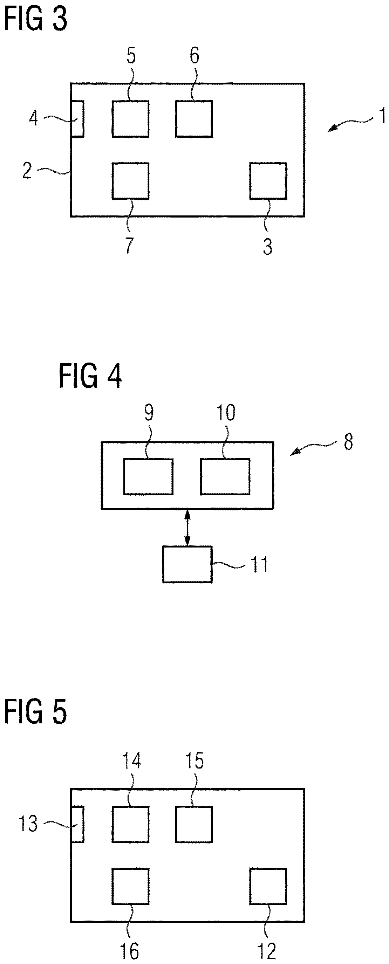

Fig. 3 zeigt eine Prinzipskizze eines erfindungsgemäßen Vorbereitungssystems 1, dass ausgebildet ist, das erfindungsgemäße Sicherstellungsverfahren durchzuführen. Das Vorbereitungssystem 1 umfasst eine Recheneinrichtung 2, die einen nicht näher gezeigten Prozessor und ein Speichermittel 3 aufweist.

Über eine Schnittstelle 4 wird gemäß Schritt S1 die Basisdesigninformation bereitgestellt. In einer Bewertungseinheit 5 kann die zukünftige Verfügbarkeit der ersten Elektronikkomponenten durch Bereitstellen der Verfügbarkeitsbewertungen gemäß den Schritten S2 bis S4 bewertet werden. Die Recheneinrichtung weist ferner eine Auswahleinheit 6 zur Auswahl wenigstens einer gemäß der Verfügbarkeitsbewertung am schlechtesten bewerteten ersten Elektronikkomponente gemäß Schritt S5 auf. Eine Ermittlungseinheit 7 ist zur Ermittlung der Alternativdesigninformationen gemäß dem Schritt S6 vorgesehen. Das Speichermittel 3 dient zur Speicherung der Alternativdesigninformationen gemäß Schritt S7.

Fig. 4 zeigt schematisch eine erfindungsgemäße Herstellungseinrichtung 8. Diese umfasst vorliegend wenigstens, als Teil einer Herstellungsanordnung, eine Druckeinrichtung 9 zum Druck der Leiterplatte und eine Bestückungseinrichtung 10 zum Bestücken der Leiterplatte mit Elektronik- und/oder Peripheriekomponenten. Die Druckeinrichtung 9 und die Bestückungseinrichtung 10 sind mithin Herstellungskomponenten der Herstellungsvorrichtung 8. Der Betrieb der Herstellungsvorrichtung 8 wird durch eine Steuereinrichtung 11 gesteuert, deren funktionaler Aufbau in Fig. 5 näher gezeigt ist.

Demnach umfasst die Steuereinrichtung 11 neben wenigstens einem nicht näher gezeigten Prozessor zunächst ebenso ein Speichermittel 12. Über eine Schnittstelle 13 empfangene Basisdesigninformation und Alternativdesigninformationen können dort beispielsweise gespeichert werden.

Die Steuereinrichtung 11 umfasst ferner eine Steuereinheit 14 zum Ansteuern der Herstellungskomponenten, insbesondere also der Druckeinrichtung 9 und der Bestückungseinrichtung 10, zur Herstellung des Elektronikprodukts gemäß Steuerinformationen der Basisdesigninformation und der Alternativdesigninformationen, vergleiche Schritte S8 und S11. In einer Überprüfungseinheit 15 kann die Erfüllung der Umstellungsbedingung gemäß dem Schritt S9 überprüft werden. Schließlich ist auch eine Auswahleinheit 16 zur Auswahl einer Alternativdesigninformation gemäß dem Schritt S10, wenn die Umstellungsbedingung erfüllt ist, vorgesehen.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 1: Vorbereitungssystem
- 2: Recheneinrichtung
- 3: Speichermittel
- 4: Schnittstelle
- 5: Bewertungseinheit
- 6: Auswahleinheit
- 7: Ermittlungseinheit
- 8: Herstellungsvorrichtung
- 9: Druckeinrichtung
- 10: Bestückungseinrichtung
- 11: Steuereinrichtung
- 12: Speichermittel
- 13: Schnittstelle
- 14: Steuereinheit
- 15: Überprüfungseinheit
- 16: Auswahleinheit

- S1 bis S11: Schritt

## Patentansprüche

1. Computerimplementiertes Verfahren zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, aufweisend folgende Schritte:
- Bereitstellen einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt,
- Bewerten der zukünftigen Verfügbarkeit wenigstens eines Teils der ersten Elektronikkomponenten in Abhängigkeit wenigstens einer Verfügbarkeitsinformation zur Ermittlung jeweiliger Verfügbarkeitsbewertungen für die bewerteten ersten Elektronikkomponenten,
- Auswahl wenigstens einer gemäß der Verfügbarkeitsbewertung am schlechtesten bewerteten ersten Elektronikkomponente,
- für jede ausgewählte erste Elektronikkomponente Ermittlung wenigstens einer Alternativdesigninformation, die eine zweite Auslegung des Elektronikprodukts mit mehreren miteinander über zweite interne Schnittstellen wechselwirkenden zweiten Elektronikkomponenten beschreibt, indem wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt wird und danach die restliche Auslegung unter Einhaltung der Anforderungen gemäß der Anforderungsinformation auf die geänderte Elektronikkomponente angepasst wird, und
- Vorhalten der wenigstens einen Alternativdesigninformation in einem Speichermittel (3, 12).

2. Verfahren nach Anspruch 1, **dadurch gekennzeichnet, dass** das Elektronikprodukt wenigstens eine Trägerkomponente für wenigstens einen Teil der Elektronikkomponenten aufweist, die wenigstens eine Leitung zur Verbindung der Elektronikkomponenten aufweist, wobei die Anpassung auf die geänderte Elektronikkomponente eine Anpassung der Leitungen der Trägerkomponente umfasst.

3. Verfahren nach Anspruch 1 oder 2, **dadurch gekennzeichnet, dass** das Elektronikprodukt als Elektronikkomponente und/oder weitere Komponente eine Peripheriekomponente umfasst, wobei die Anpassung an die geänderte Elektronikkomponente auch eine Veränderung wenigstens einer Peripheriekomponente an eine geänderte Komponenteneigenschaft umfasst.

4. Verfahren nach einem der vorangehenden Ansprüche, **dadurch gekennzeichnet, dass** zur Anpassung an die geänderte Elektronikkomponente eine Konfiguratorfunktion eines Konfiguratortools verwendet wird und/oder zur Ermittlung vorzunehmender Anpassungen wenigstens eine Simulation des Elektronikprodukts durchgeführt wird.

5. Verfahren nach einem der vorangehenden Ansprüche, **dadurch gekennzeichnet, dass** die Verfügbarkeitsinformation
- eine Historieninformation, die die Verfügbarkeit von ersten Elektronikkomponenten und/oder Austausch-Elektronikkomponenten für erste Elektronikkomponenten, die die gleiche interne Schnittstelle aufweisen, beschreibt, und/oder
- eine Herstellungsinformation, die wenigstens einen Produzenten und/oder wenigstens einen Lieferanten und/oder die Zahl der Produzenten und/oder Lieferanten und/oder wenigstens einen Lieferweg und/oder wenigstens einen Herstellungsort und/oder wenigstens eine Herstellungsmenge beschreibt und/oder aus einer Produktdatenbank abgerufen wird, umfasst.

6. Verfahren nach Anspruch 5, **dadurch gekennzeichnet, dass** eine trainierte Prädiktionsfunktion, die als Eingangsdaten wenigstens eine Benennung der jeweiligen ersten Elektronikkomponente und/oder die Historieninformation nutzt, Ausgangsdaten, die eine aufgrund der Historie abgeschätzte Verfügbarkeitsprädiktion umfassen, ermittelt und die Ausgangsdaten zur Ermittlung der Verfügbarkeitsbewertung für die jeweilige erste Elektronikkomponente verwendet werden.

7. Verfahren nach Anspruch 5 oder 6, **dadurch gekennzeichnet, dass** bei einer geringeren Zahl von Herstellern und/oder Lieferanten und/oder bei einer geringeren Herstellungsmenge und/oder bei nur oder größtenteils aus einer vordefinierten Gruppe von Krisenländern stammenden Herstellern und/oder Lieferanten eine niedrigere Verfügbarkeitsbewertung ermittelt wird.

8. Verfahren nach einem der vorangehenden Ansprüche, **dadurch gekennzeichnet, dass** bei mehreren Alternativdesigninformationen für dieselbe ausgewählte erste Elektronikkomponente jede Alternativdesigninformation, insbesondere hinsichtlich der Kosten und/oder des Aufwands und/oder der Verfügbarkeit von ersten Elektronikkomponenten unterschiedlicher zweiter Elektronikkomponenten, im Vergleich zu der Basisdesigninformation und/oder wenigstens einer weiteren Alternativdesigninformation zur Ermittlung eines Zweckmäßigkeitswerts bewertet wird, wobei eine vorbestimmte Anzahl der gemäß dem Zweckmäßigkeitswert am besten bewerteten Alternativdesigninformationen für diese ausgewählte erste Elektronikkomponente ausgewählt und der Rest verworfen wird.

9. Verfahren nach einem der vorangehenden Ansprüche, **dadurch gekennzeichnet, dass** jede Alternativdesigninformation auch eine Steuerinformation zur Ansteuerung einer Herstellungsvorrichtung (8) zur automatisierten Herstellung des Elektronikprodukts gemäß der Alternativdesigninformation umfassend ermittelt wird.

10. Verfahren zur Herstellung von Elektronikprodukten, wobei jedes Elektronikprodukt durch eine Anforderungsinformation beschrieben wird, die Anforderungen an wenigstens eine äußere Schnittstelle und/oder wenigstens eine bereitzustellende Funktionalität beschreibt, aufweisend folgende Schritte:
- Bereitstellen einer Basisdesigninformation, die eine erste Auslegung des Elektronikprodukts mit mehreren miteinander über erste interne Schnittstellen wechselwirkenden ersten Elektronikkomponenten aufweist, die die Anforderungen der Anforderungsinformation erfüllt, und wenigstens einer gemäß einem Verfahren nach einem der vorangehenden Ansprüche bereitgestellten Alternativdesigninformation für wenigstens eine ausgewählte erste Elektronikkomponente,
- Herstellen der Elektronikprodukte gemäß der Basisdesigninformation,
- Überprüfen der Erfüllung einer Umstellungsbedingung, die anzeigt, dass wenigstens eine der wenigstens einen ausgewählten ersten Elektronikkomponente nicht oder ab einem Zeitpunkt in der Zukunft nicht verfügbar ist,
- bei Erfüllung der Umstellungsbedingung für eine erste Elektronikkomponente Auswahl einer der wenigstens einen Alternativdesigninformation, die dieser ersten Elektronikkomponente zugeordnet ist und für die alle zweiten Elektronikkomponenten zumindest auch nach dem Zeitpunkt verfügbar sind, und Herstellen der Elektronikprodukte gemäß der Alternativdesigninformation.

11. Verfahren nach Anspruch 10, **dadurch gekennzeichnet, dass** die Basisdesigninformation und/oder die Alternativdesigninformation eine Steuerinformation umfassen, mit der eine Herstellungsvorrichtung (8), insbesondere umfassend eine Bestückungseinrichtung, automatisch angesteuert wird.

12. Verfahren nach Anspruch 10 oder 11, **dadurch gekennzeichnet, dass** bei mehreren einer ausgewählten ersten Elektronikkomponente zugeordneten Alternativdesigninformationen jede Alternativdesigninformation im Vergleich zu den jeweiligen anderen Alternativdesigninformationen, insbesondere hinsichtlich einer aktuellen, Kosten und/oder Aufwand beschreibenden Realisierungsinformation, bewertet wird und die am besten bewertete Alternativdesigninformation ausgewählt wird.

13. Vorbereitungssystem (1) zur Sicherstellung der Herstellbarkeit eines Elektronikprodukts, wobei das Elektronikprodukt durch eine Anforderungsinformation beschrieben wird, die Anforderungen an wenigstens eine äußere Schnittstelle und/oder wenigstens eine bereitzustellende Funktionalität beschreibt, aufweisend eine Recheneinrichtung (2), welche umfasst:
- eine Schnittstelle (4) zum Empfang einer Basisdesigninformation, die eine erste Auslegung des Elektronikprodukts mit mehreren miteinander über erste interne Schnittstellen wechselwirkenden ersten Elektronikkomponenten beschreibt, die die Anforderungen der Anforderungsinformation erfüllt,
- eine Bewertungseinheit (5) zum Bewerten der zukünftigen Verfügbarkeit wenigstens eines Teils der ersten Elektronikkomponenten in Abhängigkeit wenigstens einer Verfügbarkeitsinformation zur Ermittlung jeweiliger Verfügbarkeitsbewertungen für die bewerteten ersten Elektronikkomponenten,
- eine Auswahleinheit (6) zur Auswahl wenigstens einer gemäß der Verfügbarkeitsbewertung am schlechtesten bewerteten ersten Elektronikkomponente,
- eine Ermittlungseinheit (7) zur Ermittlung, für jede ausgewählte erste Elektronikkomponente, wenigstens einer Alternativdesigninformation, die eine zweite Auslegung des Elektronikprodukts mit mehreren miteinander über zweite interne Schnittstellen wechselwirkenden zweiten Elektronikkomponenten beschreibt, indem wenigstens die ausgewählte erste Elektronikkomponente durch eine Austauschkomponente, die eine von der ersten internen Schnittstelle der ausgewählten ersten Elektronikkomponente unterschiedliche zweite interne Schnittstelle aufweist, als zweite Elektronikkomponente ersetzt wird und danach die restliche Auslegung unter Einhaltung der Anforderungen gemäß der Anforderungsinformation auf die geänderte Elektronikkomponente angepasst wird, und
- ein Speichermittel (3) zum Vorhalten der wenigstens einen Alternativdesigninformation.

14. Herstellungsvorrichtung (8) zur Herstellung von Elektronikprodukten, aufweisend eine Steuereinrichtung (11), die zur Durchführung eines Verfahrens nach einem der Ansprüche 10 bis 12 ausgebildet ist.

15. Computerprogramm, welches, wenn es auf einer Recheneinrichtung (2) und/oder einer Steuereinrichtung (11) ausgeführt wird, diese veranlasst, ein Verfahren nach einem der Ansprüche 1 bis 12 durchzuführen.
